# EUROPEAN PATENT APPLICATION

(11) **EP 0 528 614 A1**
(43) Date of publication of application: **24.02.1993**
(21) Application number: 92307295.3
(22) Date of filing: 10.08.1992
(51) Int. Cl.: F16L 31/00

(54) **Hose connection**

(30) Priority: 15.08.1991 GB 9117585; 23.01.1992 GB 9201420
(71) Applicant: AVON POLYMER PRODUCTS LIMITED, Melksham Wiltshire SN12 8AA (GB)
(72) Inventor: Millichip, Leonard John, Melksham, Wiltshire SN12 8DU (GB); Angell, Cyril Edward Nelson, Trowbridge, Wiltshire (GB)
(74) Representative: Calderbank, Thomas Roger

(57) **Abstract**

In order to form a connection between a main hose (2) and a secondary hose (4), an insert part (8) is inserted within the main hose (2), and a spigot (12) is inserted into an end of the secondary hose (4) and mated with the insert part (8) in the main hose (2).

The spigot (12) is separate from the insert part (8), and thus the spigot (12) can be easily inserted into an aperture in the insert part (8) via an aperture (6) in the main hose. Once this is done, the spigot (12) can be secured to the insert part (8) by encapsulation and/or by interlocking of the insert part (8) and spigot (12).

## Description

The present invention relates to the connection of two hoses to form a branched connection. Such a branch connection may be required, for example, in a cooling system of an internal combustion engine.

Many different connections have been proposed for joining two hoses to form a branched connection, and in general such connections involve an insert which fits within the hoses to connect them together, and then encapsulation which seals the joint. In DE-A-3303519, the insert comprised a cylindrical main part which fitted inside one of the hoses (the main hose) and had an integral spigot which projected through a hole in the main hose and on which was received the other hose (the secondary hose). The branch connection was then encapsulated by suitable encapsulating material. In such an arrangement, however, it is difficult to fit the insert into the main hose.

In a recent development, made public under the name Diradia, the insert again comprised a cylindrical main part and a projecting integral spigot, but in this case the main hose was split, to enable the insert to be inserted easily in the respective parts of the main hose. Again, the branched connection was then encapsulated by suitable encapsulating material. A disadvantage of such an arrangement is that the dividing of the main hose introduces weakness.

The present invention seeks to improve on existing branched connections. In a first aspect, the present invention proposes that the main hose and the secondary hose are joined by an insert, which insert has a main insert part insertable into the main hose, and has an aperture therein which is alignable with a corresponding aperture in the main hose. A separate spigot is then provided to which the secondary hose is fitted, and which is mated with the insert part with the free end of the spigot in the aperture in the insert part.

It is then normally necessary to secure the insert part and spigot together to prevent separation thereof. One arrangement for achieving such securing is by encapsulating the main and secondary hoses at least in regions corresponding to the insert part and spigot. Preferably, the spigot has at least one projection locatable outside the main hose and defining, together with the abutment region, at least one recess in the spigot into which encapsulation material is receivable.

The spigot then receives the secondary hose, at a part further from the aperture than the at least one projection, so that when the encapsulating material is formed, it contacts the main and secondary hoses, and the spigot in the region of the recess, thereby securing the spigot in place and securing together the branch connection.

Preferably, the abutment part of the spigot has a first flange which has an interference fit with the aperture in the main part of the insert, and a second flange which extends to the main hose at the aperture.

In the case that the spigot has an interference fit in the main part of the insert, it is then possible to provide a protrusion on the spigot, and a recess in the main part of the insert, or vice versa, in order to maintain a desired orientation of the spigot and the main part of the insert.

The projection may be a flange extending circumferentially around the spigot, or may be castellated series of projections around the spigot. In a further alternative, the recess may be provided by bores in the spigot, so that the projection and the abutment region are integral around those bores.

In a second arrangement the present invention proposes that the spigot is lockably engageable with the main part of the insert at the aperture, and which, when locked, extends through the aperture and receives the secondary hose. This then provides the securing of the spigot and main part of the insert. As in the previous general aspect, the resulting branched connection may be sealed by suitable encapsulation, but the locking of the main hose and secondary hose is primarily by way of direct physical engagement.

Many different sorts of lockable connection may be used in this arrangement of the present invention. A snap fitting is a particularly preferred option, but it is also possible to use a bayonet or screw fitting.

In both arrangements, since the spigot is originally separate from the main part of the insert, the main part of the insert can be inserted in to the main part of the hose without difficulty. Once the aperture in the main part of the insert has been aligned with the aperture in the main hose, it is a straightforward matter to locate the end of the spigot carrying the abutment part in the main part of the insert. Then the secondary hose may be located on the spigot and the whole encapsulated. Alternatively, the secondary hose may be fitted onto the spigot prior to the insertion of the abutment part of the spigot in the main part of the insert.

In a further aspect, the spigot is rotatable relative to the main part of the insert. This can be achieved in the first aspect by making the part of the spigot above the point of mating rotatable relative to the abutment part and projection. In the second general aspect, this may be achieved by similarly fabricating corresponding parts of the spigot, or by designing such rotatability into the lockable connection. In this way, particularly if the spigot is curved or angled at an angle other than 90° to the axis of the main part of the insert, rotation of part of the spigot changes the orientation of the free end of the spigot furthest from the main part of the insert, thereby permitting connection of the secondary hose in any selected direction. This gives that advantage that a range of different connections is possible. Indeed, in the first general aspect this may be achieved simply by rotating the spigot in the main part of the insert prior to encapsulation.

In a further development, a plurality of different spigots are provided, any one of which may be engaged with the main part of the insert, to permit eg, a variety of different spigot angles relative to the main part of the insert.

As was mentioned earlier, the branched connection may be sealed by an encapsulation. In a still further development which may be used with the first aspect but is a second independent aspect of the present invention, at least one hole is provided in the secondary hose and/or main hose which is then plugged with the encapsulation material. Such an arrangement may achieve more secure bonding of the encapsulation to the hose(s). Preferably, a plurality of holes are provided circumferentially around the secondary and/or main hose for this purpose.

Where such an insert is provided, there is then further advantage that, since the encapsulation material in the hole(s) may be in contact with the insert, the encapsulation material has a higher friction and therefore resists slippage of the secondary or main hose from the corresponding part of the insert. This assumes that the holes are through-holes in the hose; it would also be possible to use a blind hole but with reduced bonding effect.

By use of the present invention, long term problems associated with compression set of the hose or relaxation of the encapsulating material may be reduced or eliminated, such compression/relaxation otherwise weakening the bonding of the hose and encapsulation. Such problems may otherwise increase the probability of leakage of the contents of the hoses in extended service.

One problem with hoses, particularly when used in an internal combustion engine, is that the hose must be curved in order to fit the space allowed. The use of an insert rigidifies the main hose at the branched connection and thus restricts the curving of the hose. Therefore, in a third aspect, it is proposed that the insert, which again comprises a main part which is receivable in the main hose and a spigot which is receivable in the secondary hose, has the ends of the main part angled relative to the longitudinal axis of the main part. Normally, such angling will be such that the main part of the insert tapers away from the spigot, so that the main part of the insert has suitable strength around the join with the spigot, but its length on the opposite side of the hose is reduced, to permit bending of the main part of the hose in the area of the branched connection.

Preferably, the tapering of the insert is such that the angle made by the end of the insert to the perpendicular longitudinal axis of the insert is 5° to 45°. Furthermore, it is desirable that the length of the insert, in the direction of the longitudinal axis, at the narrower end of the taper is at least as wide as the aperture which receives the spigot, and possibly as wide as the total width of the encapsulation surrounding the spigot. Again, this feature may be used in combination with the lockably engageable spigot described with reference to the previous aspect of the present invention, but may also be used with integral spigots and is thus an independent aspect of the present invention.

Furthermore, it is then possible additionally to shape the encapsulation so that it conforms generally to the tapering of the main part of the insert, so that the encapsulation does not resist bending of the main hose. Indeed, this idea may be developed further, and applied to arrangements in which there is no insert, and only the encapsulation is so shaped. Thus, the shaping of the main part of the insert and/or the encapsulation represents the third aspect of the present invention.

Of course, any of the above aspects may be used alone or in combination. Furthermore, the present invention relates to a method of assembling a branched connection according to any of the above aspects, to the branched connection thus formed, and to an assembly (kit) of parts for making such a branched connection.

Embodiments of the present invention will now be described in detail, by way of example, with reference to the accompanying drawings, in which:
Fig. 1 shows a section through a branched connection according to the present invention;
Fig. 2 shows a section through a branched connection according to the present invention;
Fig. 3A shows a section through a spigot used in the present invention;
Fig. 3B shows a section through an insert part used in the present invention;
Fig. 4 shows a perspective view of the inner sleeve of Fig. 3B; and
Fig. 5 shows a view of such a branched connection when encapsulated by a protective encapsulation.

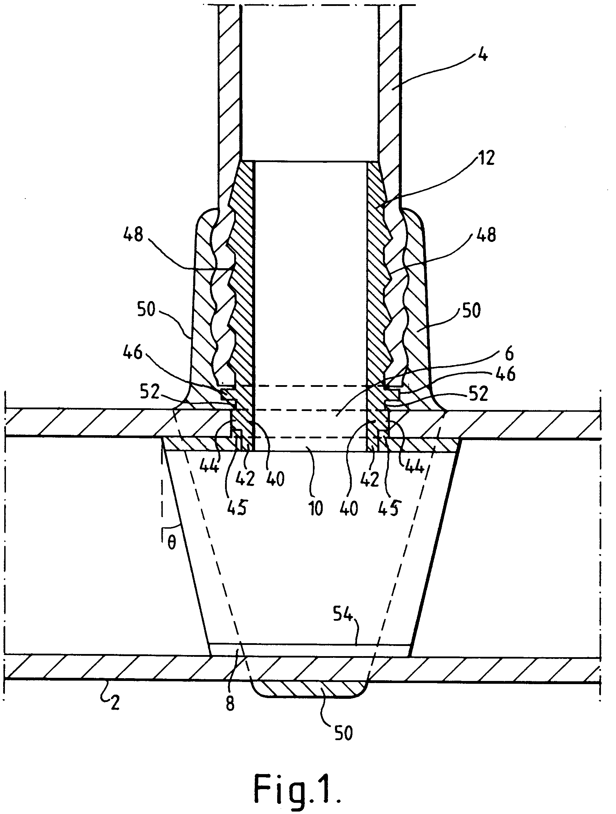

In Fig. 1, a main hose 2 is joined to a secondary hose 4 to form a branched connection according to an aspect of the present invention. From a such a branched connection, the first step is to form an aperture 6 in the main hose 2, at the location at which the secondary hose 4 is to be joined. Then, a main part of an insert, formed by an inner sleeve 8 is inserted into the main hose 2. That inner sleeve 8 has an aperture 10 in a surface thereof, and the inner sleeve 8 is positioned so that the aperture 10 is aligned with the aperture 6 in the main hose 2. This insertion and positioning can be achieved by collapsible mandrel.

A spigot 12 is provided with an abutment region 40 at an end thereof, and the spigot is inserted through the aperture 6 in the main hose 2 so that the abutment region contacts the inner sleeve 8. It can been seen that abutment region includes a first cylindrical flange 42 extending axially of the spigot 12, which has an interference fit with the inner sleeve 8 at the aperture 10. The abutment region 40 also has a second flange 44 extending circumferentially of the spigot, so that one surface of that flange 44 contacts a rim 45 of the inner sleeve, whilst the end of the flange 44 contacts the main hose 2. Thus, the spigot 12 can be pushed into the inner sleeve 8 to a distance limited by the flange 44.

The spigot 12 also has a circumferential projection 46 which acts as a limit to the insertion of the spigot 12 in the secondary hose 4. It can also be seen that the outer cylindrical surface of 48 of the spigot 12 is ribbed to improve the engagement with the secondary hose 4.

Then, with the secondary hose 4 connected to the main hose 2 via the spigot 12, which spigot is held in place due to interference fit with the inner sleeve 8, the branched connection is encapsulated by suitable encapsulation 50. The encapsulation 50 extends around the main hose 2 and the secondary hose 4 at the branch connection, thereby sealing the joint.

It can be seen that the flange 44 and the projection 46 are such that a circumferential groove 52 is formed in the spigot 12 immediately adjacent the main hose 2. The material of the encapsulation 50 enters that groove 52, and this "keys" the encapsulation to the spigot 12, hence locking together the main and secondary hoses 2, 4.

The figure also shows that the encapsulation 50 and the inner sleeve 8 tapers a direction away from the secondary hose 4. This tapering is such that the ends of the inner sleeve 8 are inclined as an angle ϑ to the perpendicular to the longitude and axis of the main hose 2. This permits the main hose 2 to be curved as it extends away from the branch connection. The angle ϑ will depend on the amount of curvature needed, but will normally be between 5° and 45°. It is also desirable that the length of the part 54 of the inner sleeve 8 which opposite to the aperture 10 has a length in the direction of the longitude and axis of the main hose 2 which is at least as long as the distance from one edge to the other the encapsulation 50 surrounding the secondary hose 4. Again, this distance is measured in the direction of the main hose. This enables the inner sleeve to provide sufficient support.

In the embodiment described above, the projection 48 and groove 52 extend circumferentially around the spigot 12. It will also be possible for the projection 46 to be replace by flanges which are we not continuous around the spigot 12, forming a castellated affect. Such an arrangement will be equally effective in a branched connection according the present invention.

Furthermore, the groove 52 need not be continuous around the spigot 12. It would be possible for the radially outer face of the projection 44 to be continuous with the radially outer edge of the flange 46, except at a series of bores or slots corresponding to the location of groove 52.

As shown in the figure, there is no "keying" together of the inner sleeve 8 and spigot 12, so that the spigot 12 is free to rotate in the aperture 10 prior to the formation of the encapsulation 50. It is possible to provide a protrusion on the spigot 12 engaging a recess in the inner sleeve 8, in order to maintain a desired orientation of spigot 12 and sleeve 8. Of course, the protrusion could be on the insert and the recess on the spigot. Such "keying" together of the sleeve 8 and spigot 12 is particularly important where the spigot 12 is not axially straight, as in the figure, but is such that is that its free end opens in a direction which is not perpendicular to the axis of the main hose 2. This may be desirable, for example, in order to ensure that the secondary hose 14 extends in the correct direction. Indeed, this idea may be extended further by providing the spigot 12 with a rotatable part above the encapsulation 50 to enable the orientation of the secondary hose 4 to be determined after construction of the branched connection.

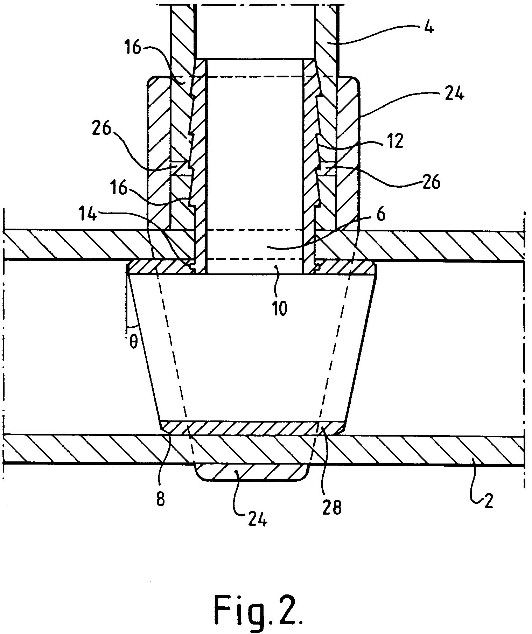

Referring to Fig. 2, showing an alternative embodiment of the present invention, a main hose 2 is to be joined to a secondary hose 4 to form a branched connection according to the present invention. First, an aperture 6 is formed in the main hose 2, at the location at which the secondary hose 4 is to be joined. Then, a main part of an insert, formed by an inner sleeve 8, is inserted into the main hose 2, that inner sleeve 8 having an aperture 10 in a surface thereof. The inner sleeve 8 is positioned so that the aperture 10 is aligned with the aperture 6 in the main hose 2. This insertion and positioning may be achieved by a collapsible mandrel.

Then, one end of a spigot 12 is inserted through the aperture 6 in the main hose 2, and the aperture 10 in the inner sleeve 8. That end of the spigot 12 has a circumferential projection 14 thereon, which projection 14 lockably engages the walls of the aperture 10, thereby securing together the spigot 12 and the inner sleeve 8. Then, the secondary hose 4 may be fitted on to the spigot 12, the spigot 12 having ribs 16 on its outer surface to help to provide satisfactory engagement with the secondary hose 4. It may be possible to use grooves, projections or other shaped ridges as an alternative to the ribs 16.

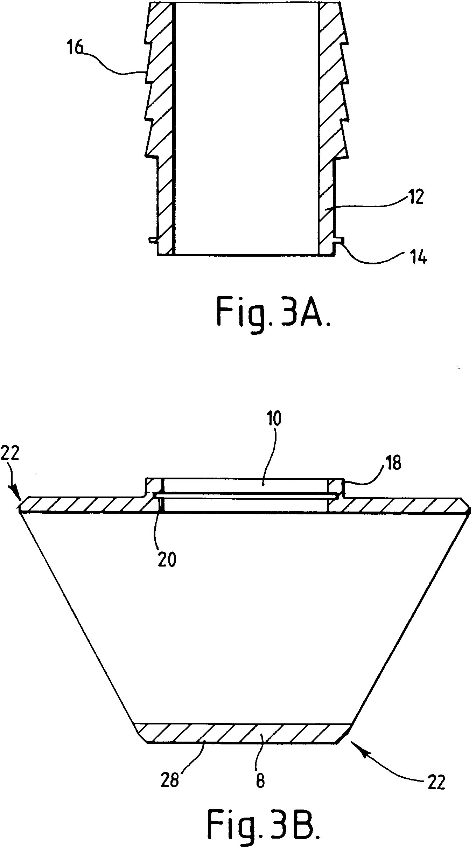

The engagement of the spigot 12 and the inner sleeve 8 can be seen more clearly from Figs. 3A and 3B. As was mentioned earlier, the spigot 12 has, adjacent the end thereof, a circumferential projection 14. The inner sleeve 8 has a lip 18 around the aperture 10, and the wall of that lip 18 defining the aperture 10 has a circumferential slot 20 therein, which slot may then engage the projection 14. It can also be appreciated that the outer surface of the lip 18 abuts against the wall of the aperture 6 in the main hose 2, and may therefore be smoothly curved, as shown in Fig. 3B, furthermore, the ends 22 of the inner sleeve 8 may be chamfered to assist in the insertion of the inner sleeve 8 in the main hose 2.

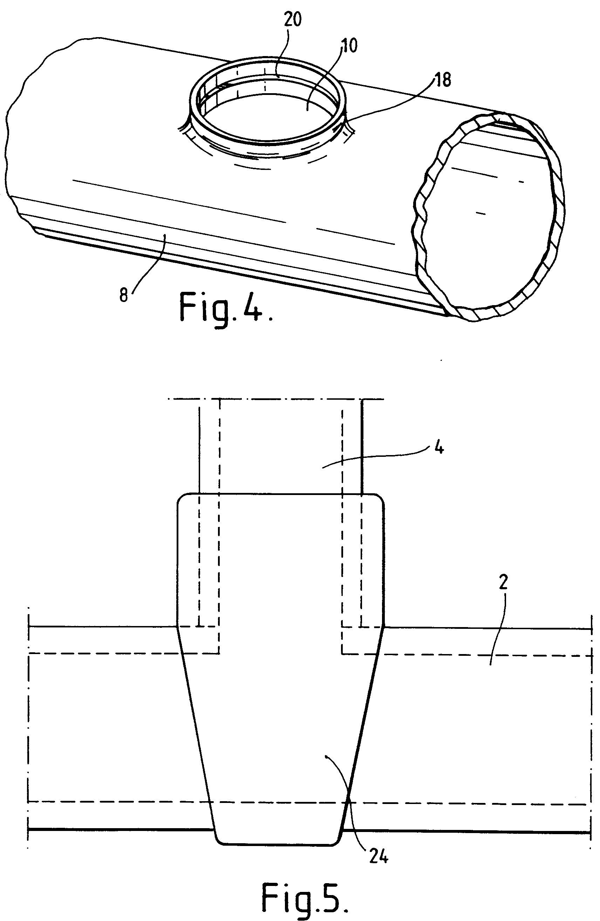

The shaping of the lip 18 may also be seen from Fig. 4, which Figure also shows that the circumferential groove 20 extends around the aperture 10. Within the present invention it is possible for the groove 20 to be discontinuous, and to engage a plurality of projections on the spigot 12. However, the arrangement described permits the spigot 12 to rotate relative to the inner sleeve 8, which is desirable, particularly if the spigot 12 is shaped so as to angle the secondary hose 4 relative to the perpendicular to the axis of the main hose 2.

Returning to Fig. 2, once the secondary hose 4 has been fitted onto the spigot 12, the branched connection is encapsulated by a suitable encapsulation 24. The encapsulation extends around the main hose 2 and the secondary hose 4 at the branched connection, thereby sealing the joint. Furthermore, holes 26 may be provided in the secondary holes 4 adjacent the spigot 12, so that material of the encapsulation 24 extends into those holes 26. This "keys" the encapsulation to the secondary hose 4. Furthermore, when the holes 26 extend wholly through the secondary hose 4, as shown in Fig. 2, the material of the encapsulation 24 will then be in contact with the spigot 12, improving the resistance to relative movement of the spigot 12 and the secondary hose 4.

Fig. 5 shows in more detail the shaping of the encapsulation 24. It can be seen that the encapsulation 24 tapers in a direction away from the secondary hose 4. Fig. 2 also shows that the inner sleeve 8 is similarly shaped. The reason for this tapering, so that the ends of the inner sleeve 8 are inclined at an angle ϑ to the perpendicular to the longitudinal axis of the main hose 2, is that this permits the main hose 2 to be curved as it extends away from the branched connection. The angle ϑ will depend on the amount of curvature needed, but will normally be between 5° and 45°. It is also desirable that the length of the part 28 of the inner sleeve 8 which is opposite to the aperture 10 has a length (in the direction of the longitudinal axis of the main hose 12) which is as least as long as the distance from one edge of the encapsulation 24 surrounding the secondary hose 4 to the other, again in the direction of the longitudinal axis of the main hose 12. This then provides sufficient support. The inner sleeve 8 and the spigot 12 may be made of metal, thermoplastic or thermosetting material. It is not necessary that the inner sleeve 8 and the spigot 12 are made of the same material, although this will normally be preferred, to prevent frictional wear at their connection. The encapsulation 24 may be of thermosetting or thermoplastic material, and is preferably arranged to shrink on encapsulation, thereby ensuring a good bond to the main and secondary hoses 2,4. It may become rigid on completion of the encapsulation process. To form the encapsulation 24, a mould may be used, which mould may then assist in aligning the main and secondary hoses, 2,4.

## Claims

1. A method of forming a joint between a main hose (2) and a secondary hose (4) in which a hollow insert part (10) is inserted within the main hose (2); characterised in that;
a spigot (12) is inserted into one end of the secondary hose (4);
the free end of the spigot (12) is mated with the insert part (8) with the free end in an aperture in the insert part (8).

2. A method according to claim 1 wherein the spigot (12) is secured relative to the insert part (8) by encapsulating the main and secondary hoses at least in regions corresponding to the insert part (8) and spigot (12).

3. A method according to claim 2, wherein the encapsulation material (50) extends into a recess (52) in the spigot between the main and secondary hoses (2,4).

4. A method according to claim 1 or claim 2, wherein the spigot (12) is secured relative to the insert part (8) by snap fitting of a projection and corresponding recess.

5. A branched hose comprising a main hose (2), a hollow insert part (8) in the main hose (2), a hollow spigot (12 extending from the insert part (8) through the main hose (2), a secondary hose (4) on one end of the spigot (12);
characterised in that:
the spigot (12) is non-integral with the insert part, and is received in an aperture (10) of the insert part (8), and is mated with the insert part (8).

6. A branched hose according to claim 5, having encapsulation material (50) covering the main and secondary hoses (2,4) at regions corresponding to the insert part (8) and spigot (12) respectively to secure the spigot relative to the insert part.

7. A branched hose according to claim 6, wherein the encapsulation material (50) extends into a recess (52) in the spigot between the main and secondary hoses (2,4).

8. A branched hose according to claim 7, wherein the recess (52) is defined by a projection (46) on the spigot (12).

9. A branched hose according to claim 8 wherein the projection (46) is a circumferential flange around the spigot (12).

10. A branched hose according to claim 7 wherein the recess (52) is defined by at least one bore within the spigot (12).

11. A branched hose according to any one of claims 7 to 10 wherein that part of the spigot (12) engaging the secondary hose (4) is rotatable relative to the insert part (8).

12. A branched hose according to claim 11 wherein that part of the spigot (12) engaging the secondary hose (4) is rotatable relative to that part of the spigot (12) received by the insert part (8) thereby to enable relative rotatability of the main and secondary hoses (2,4).

13. A branched hose according to any preceding claim wherein the spigot (12) and the insert part (8) have an interference fit.

14. A branched hose according to any one of the preceding claims wherein the spigot (12) is secured to the insert part due to the lockable engagement of the spigot (12) and insert part (8) of the aperture.

15. A branched hose according to claim 14 wherein the lockable engagement of the spigot (12) and insert part (8) is a snap fitting of a projection and corresponding recess.

16. A branched hose according to any one of the preceding claims, wherein the ends of the insert part (8) are inclined relative to the longitudinal axis thereof in a direction such that the ends of the insert part (8) taper away from the spigot (12).

17. A branched hose comprising a main hose (2), a hollow insert part (8) in the main hose (2), a hollow spigot (12) extending from the insert part (8) through the main hose (2), a secondary hose (4) on the one end of the spigot;
characterised in that:
the ends of the insert part (8) are inclined relative to the longitudinal axis thereof in directions such that the ends of the insert part (8) taper away from the spigot (12).

18. A branched hose comprising a main hose (2), a secondary hose (4) extending from a wall of the main hose (2) and encapsulation material (50) covering adjacent regions of the main and secondary hoses (2,4) respectively;
characterised in that:
the ends of the part of the encapsulation material (50) on the main hose are inclined relative to the longitudinal axis of the main hose in directions such that those ends taper away from the secondary hose (4).

19. A branched hose comprising a main hose (2), a secondary hose (4) extending from a wall of the main hose (2) and encapsulation material (50) covering adjacent regions of the main and secondary hoses (2,4) respectively;
characterised in that:
the main and/or secondary hose has at least one bore therein and the encapsulation material extends into the bores to bond the encapsulation to the main and/or secondary hose.

20. A branched hose according to claim 19, wherein the main and/or secondary hose has a plurality of said bores, said bores being spaced circumferentially around the main and/or secondary hose.

21. A kit of parts for forming a joint between a main hose (2) and a secondary hose (4) comprising;
an insert part (8) insertable within the main hose (2);
a spigot (12) insertable into the end of the secondary hose (4);
characterised in that;
the spigot (12) is separate from the insert part (8) and the spigot (12) and the insert part (8) are matable via a corresponding aperture (10) in the insert part (8).

22. A kit of parts for forming a joint between a main hose (2) and a secondary hose (4) comprising:
an insert part (8) insertable within the main hose (2);
a spigot (12) insertable into the end of the secondary hose (4);
characterised in that:
the ends of the insert part (8) are inclined relative to the longitudinal axis thereof in a direction such that the ends of the insert part (8) taper away from the spigot (12) when the spigot and insert part are mated.
